# EUROPÄISCHE PATENTSCHRIFT

(11) **EP 2 995 917 B1**
(45) Veröffentlichungstag und Bekanntmachung des Hinweises auf die Patenterteilung: **19.04.2017**
(21) Anmeldenummer: 15182034.7
(22) Anmeldetag: 21.08.2015
(51) Int. Cl.: G01J 5/08, G01J 5/02, G01J 5/10, B60H 1/00, G01K 1/20

(54) **TEMPERATURERFASSUNGSVORRICHTUNG FÜR EIN FAHRZEUGHEIZGERÄT**
TEMPERATURE DETECTING DEVICE FOR A VEHICLE HEATING DEVICE
DISPOSITIF D'ENREGISTREMENT DES TEMPERATURES POUR UN APPAREIL DE CHAUFFAGE POUR VEHICULE

(30) Priorität: 10.09.2014 DE 102014218113
(43) Veröffentlichungstag der Anmeldung: 16.03.2016
(73) Patentinhaber: Eberspächer Climate Control Systems GmbH & Co. KG, 73730 Esslingen (DE)
(72) Erfinder: Humburg, Michael, 73035 Göppingen (DE); Kennerknecht, Klaus, 73732 Esslingen (DE)
(74) Vertreter: RLTG

(56) Entgegenhaltungen:
- DE-B3-102010 004 305
- US-A1- 2009 206 264
- US-A1- 2013 278 226

## Beschreibung

Die vorliegende Erfindung betrifft eine Temperaturerfassungsvorrichtung für ein Fahrzeugheizgerät zur Erfassung einer Fluidtemperatur.

Aus der DE10 2010 004 304 B3 ist eine Sensoranordnung für die Ermittlung einer Innenraumtemperatur in einem Kraftfahrzeug bekannt. Bei dieser bekannten Sensoranordnung grenzt an den Innenraum ein Bauteil aus für thermische IR-Strahlung transparentem Werkstoff an. Auf eine dem Innenraum zugewandte Seite ist an diesem Bauteil eine die thermische IR-Strahlung reflektierende, wärmeabsorbierende Materiallage aufgebracht. An der anderen Seite dieses Bauteils ist ein IR-Strahlungssensor vorgesehen.

Die US 2009/206264 A1 offenbart einen Infrarot-Temperatursensor mit einem in einem Gehäuse angeordneten Infrarot-Sensorelement. An einer dem Infrarot-Sensorelement gegenüberliegenden Seite weist das Gehäuse einen Abstrahlungsbereich mit einer glatt polierten Oberfläche auf, um Infrarotstrahlung besser von der Innenoberfläche desselben zu emittieren.

Zur Erfassung einer Temperatur eines in einem Fahrzeugheizgerät verwendeten Fluids existieren grundsätzlich verschiedene Möglichkeiten, beispielsweise durch Messung eines in einem relevanten Temperaturbereich ein signifikant temperaturabhängiges Verhalten aufweisenden elektrischen Widerstandes. Darüber hinaus besteht die Möglichkeit, die Temperatur eines Fluids anhand der von diesem Fluid abgestrahlten Strahlung zu erfassen. Diese Messmethode basiert auf dem Stefan-Boltzmann-Gesetz, wonach die von einem Körper emittierte Strahlungsleistung mit T⁴ skaliert. Eine präzise Temperaturerfassung auf Grundlage dieser Messmethode ist jedoch nur dann möglich, wenn die empfangene Strahlung eindeutig dem zu messenden Fluid zugeordnet werden kann, da ansonsten von der Umgebung des Fluids emittierte Strahlung die Temperaturbestimmung beträchtlich verfälschen kann. Dies ist insbesondere dann der Fall, wenn das Fluid ein Gas ist, da dieses dann im Vergleich zur Umgebung eine wesentlich geringere Dichte aufweist.

Angesichts dieser Probleme ist es eine Aufgabe der vorliegenden Erfindung, eine Temperaturerfassungsvorrichtung für ein Fahrzeugheizgerät bereitzustellen, mit welcher eine präzise Fluidtemperaturerfassung möglich ist.

Gemäß der vorliegenden Erfindung wird diese Aufgabe durch eine Temperaturerfassungsvorrichtung für ein Fahrzeugheizgerät zur Erfassung einer Fluidtemperatur gelöst, umfassend einen Temperatursensor sowie ein Kontaktelement mit einer von dem Fluid wenigstens bereichsweise umströmbaren ersten Seite und einer von der ersten Seite abgewandten zweiten Seite, wobei der Temperatursensor als Strahlungssensor ausgebildet ist und wobei das Kontaktelement derart relativ zum Temperatursensor angeordnet ist, dass wenigstens ein Teil der von der zweiten Seite des Kontaktelements emittierten Strahlung von dem Temperatursensor empfangbar ist.

Mit der erfindungsgemäßen Temperatuerfassungsvorrichtung wird durch den Einsatz eines Kontaktelements, dessen erste Seite von dem zu messenden Fluid umströmbar ist, eine indirekte Temperaturerfassung realisiert. Das die erste Seite umströmende Fluid steht in thermischem Kontakt mit dem Kontaktelement, d.h. es überträgt Wärme auf dieses oder entzieht diesem Wärme. Dadurch stellt sich ein thermisches Gleichgewicht zwischen Fluid und Kontaktelement ein, was zur Folge hat, dass das Kontaktelement die Temperatur des Fluids annimmt und für diese Temperatur charakteristische Strahlung emittiert. Durch den Einsatz eines Kontaktelements wird zudem die von der Umgebung des Fluids abgestrahlte Strahlung abgeschirmt, was eine präzise Erfassung der Fluidtemperatur ermöglicht.

Erfindungsgemäß ist ferner vorgesehen, dass die zweite Seite des Kontaktelements einen in Richtung des Temperatursensors Strahlung abstrahlenden Abstrahlungsbereich umfasst. Ein derartiger Abstrahlungsbereich kann eine konkave Form und insbesondere die Form eines Segments einer Kugelschale aufweisen, deren Mittelpunkt im Bereich des Temperatursensors liegt. Dadurch kann sichergestellt werden, dass eine für eine präzise Temperaturerfassung ausreichende Strahlungsintensität in Richtung des Temperatursensors abgestrahlt wird.

Um die in Richtung des Temperatursensors abgestrahlte Strahlung weiter erhöhen zu können, weist der Abstrahlungsbereich wenigstens bereichsweise im Vergleich zu vom Abstrahlungsbereich verschiedenen Bereichen der zweiten Seite des Kontaktelements eine höhere Oberflächenrauigkeit auf. Durch eine erhöhte Oberflächenrauigkeit im Bereich des Abstrahlungsbereichs im Vergleich zu von diesem verschiedenen Bereichen der zweiten Seite kann dafür gesorgt werden, dass eine Strahlungsemission bevorzugt durch den Abstrahlungsbereich und somit in Richtung des Temperatursensors erfolgt, da der Grad der Totalreflexion in diesem Bereich im Vergleich zu vom Abstrahlungsbereich verschiedenen Bereichen der zweiten Seite mit geringerer Oberflächenrauigkeit verringert ist.

Um sicherstellen zu können, dass hauptsächlich Strahlung von dem Abstrahlungsbereich empfangen wird, kann in Weiterbildung der Erfindung vorgesehen sein, dass dem Temperatursensor eine ein Sichtfenster aufweisende Abschirmung zugeordnet ist, wobei das Sichtfenster derart relativ zum Temperatursensor und zum Kontaktelement angeordnet ist, dass es im Wesentlichen nur vom Abstrahlungsbereich emittierte Strahlung zum Temperatursensor durchlässt. Die Abschirmung kann beispielsweise aus poliertem Metallblech hergestellt sein. Dieses zeichnet sich durch einen Emissionsgrad von etwa 0,03 aus. Der Emissionsgrad gibt die bei einer bestimmten Temperatur emittierte Strahlungsleistung relativ zu der von einem vollkommen schwarzen Körper gleicher Temperatur emittierten Strahlungsleistung an. Ein Emissionsgrad von 0,03 bedeutet also, dass die von einem polierten Metallblech emittierte Strahlungsleistung nur ca. 3% der von einem vollkommen schwarzen Körper gleicher Temperatur emittierten Strahlungsleistung entspricht.

Um einen besonders effizienten Energieübertrag von dem Fluid auf das Kontaktelement erlangen zu können, kann in Weiterbildung der Erfindung vorgesehen sein, dass auch die zweite Seite des Kontaktelements von dem zum messenden Fluid umströmbar ist.

Für eine besonders genaue Temperaturmessung, ist es vorteilhaft, einen Sensor zu verwenden, dessen Sensitivitätsbereich auf denjenigen Emissionswellenlängenbereich abgestimmt ist, in welchem die spektrale Bestrahlungsstärke ihr Maximum aufweist. Bei Fahrzeugheizgeräten liegt die zu messende Temperatur unter 50 °C. In diesem Temperaturbereich weist die spektrale Bestrahlungsstärke ihr Maximum im mittleren Infrarot (MIR)-Bereich auf. Es ist daher vorteilhaft, einen Infrarotsensor als Temperatursensor zu verwenden.

In Weiterbildung der Erfindung kann vorgesehen sein, dass das Kontaktelement, vorzugsweise aus schwarzem, Kunststoff hergestellt ist. Kunststoff, insbesondere schwarzer Kunststoff, zeichnet sich durch einen hohen Emissionsgrad von bis zu 0,9 aus. Schwarzer Kunststoff emittiert also eine wesentliche höhere Strahlungsleistung als beispielsweise poliertes Blech und ermöglicht daher eine präzise und schnelle Temperaturerfassung. Ein aus Kunststoff hergestelltes Kontaktelement trägt aufgrund der im Vergleich zu Metall niedrigeren Wärmeleitfähigkeit darüber hinaus auch dazu bei, dass schnelle Temperaturänderungen des Fluids im Prinzip nicht detektiert werden. Dies führt beispielsweise dazu, dass bei einem Fahrzeug kurzzeitige Temperaturschwankungen, bedingt durch ein Öffnen einer Tür oder eines Fensters, im Wesentlichen nicht detektiert werden. Dieser Umstand hat den Vorteil, dass der Betrieb des Heizgeräts durch die Regelungselektronik nicht kurzzeitig umgestellt werden muss, um diese Temperaturschwankungen zu kompensieren.

Um einen besonders effizienten Energieübertrag von dem zu messenden Fluid auf das Kontaktelement erlangen zu können, kann in Weiterbildung der Erfindung vorgesehen sein, dass das Kontaktelement eine Kontaktflächenformation, vorzugsweise einen Vorsprung, an der ersten Seite aufweist. Durch eine entsprechende Kontaktflächenformation kann die Kontaktfläche zwischen Kontaktelement und dem zu messenden Fluid im Vergleich zu einem keine Kontaktflächenformation aufweisenden Kontaktelement erhöht werden. Durch die vergrößerte Oberfläche des Kontaktelements kann Energie effizient zwischen dem strömenden Fluid und dem Kontaktelement ausgetauscht werden, so dass das Kontaktelement innerhalb kurzer Zeit in ein thermisches Gleichgewicht mit dem zu erfassenden Fluid bringbar ist.

Um einen besonders kompakten Aufbau erlangen zu können, kann ferner vorgesehen sein, dass der Temperatursensor an einem Gehäuse eines Steuergeräts vorgesehen ist, wobei vorzugsweise das Kontaktelement durch ein Teil des Gehäuses bereitgestellt ist. Gemäß dieser Weiterbildung der Erfindung kann einerseits auf ein zusätzliches Gehäuse für den Temperatursensor verzichtet werden. Andererseits bietet eine derartige Ausbildung auch die Möglichkeit, den Temperatursensor direkt in die Steuerungsplatine zu integrieren, was zu einem insgesamt noch kompakteren Aufbau beiträgt.

Um den Einfluss der von Schaltungsbauelementen im Betrieb erzeugten Wärme auf die Temperaturmessung des Fluids zu minimieren, kann weiter vorgesehen sein, dass das Kontaktelement durch Stege mit dem Gehäuse verbunden ist. Diese Stege können dazu beitragen, dass innerhalb des Gehäuses des Steuergeräts dissipierte Wärmeleistung nur zu einem geringen Bruchteil auf das Kontaktelement übertragen wird, so dass eine Verfälschung der Messung der Temperatur des Fluids begrenzt wird.

Um hierbei trotzdem für ein geschlossenes Gehäuse sorgen zu können, um das Eindringen von Fremdkörpern, wie etwa Staub, zu verhindern, kann weiter vorgesehen sein, dass das Gehäuse ein zwischen dem Temperatursensor und dem Kontaktelement angeordnetes, für zu erfassende Strahlung durchlässiges Fensterelement aufweist.

Die vorliegende Erfindung betrifft ferner ein Fahrzeugheizgerät, umfassend eine erfindungsgemäße Temperaturerfassungsvorrichtung. Diese kann ein in einem Gehäuse aufgenommenes Steuergerät umfassen, wobei der Temperatursensor am Gehäuse vorgesehen ist und wobei das Kontaktelement am Gehäuse vorgesehen oder/und durch dieses bereitgestellt ist.

Die vorliegende Erfindung wird nachfolgend durch Bezugnahme auf die beigefügten Figuren näher erläutert werden. Es zeigt:
- Figur 1: eine Querschnittansicht durch eine Temperatuerfassungsvorrichtung;
- Figur 2: einen Abschnitt der in Figur 1 gezeigten Temperaturerfassungsvorrichtung;
- Figur 3: eine alternative Ausgestaltungsform der in den Figuren 1 und 2 gezeigten Temperaturerfassungsvorrichtung; und
- Figur 4: eine Ansicht der in Figur 3 gezeigten Temperaturerfassungsvorrichtung in Richtung der Linie IV-IV.

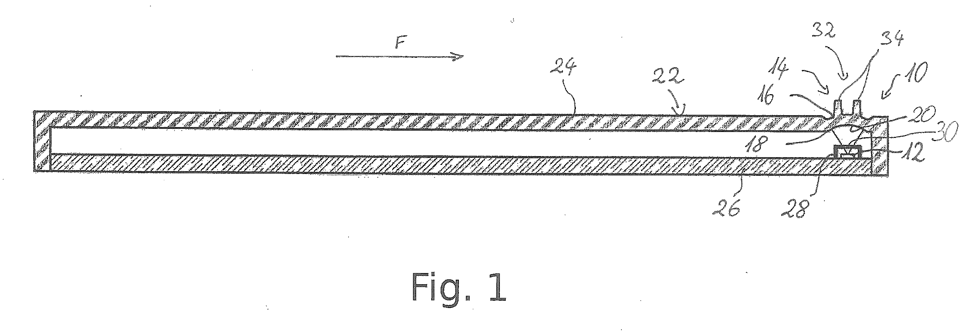

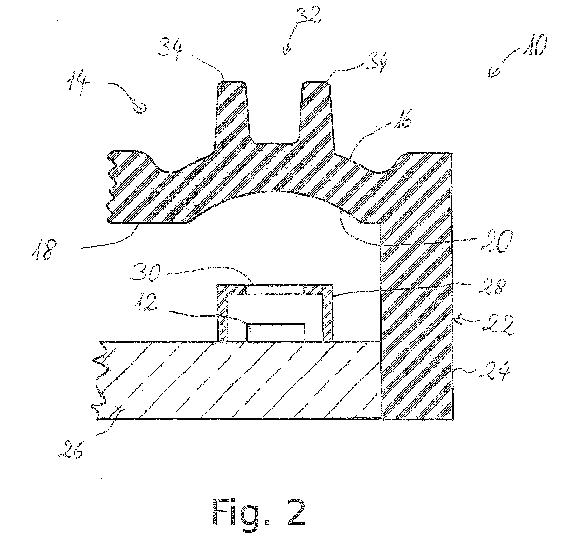

In den Figuren 1 und 2 ist eine erste Ausführungsform einer Temperaturerfassungsvorrichtung 10 für ein Fahrzeugheizgerät zur Erfassung einer Fluidtemperatur gezeigt. Bei dem Fluid, dessen Temperatur zu erfassen ist, kann es sich beispielsweise um einem Fahrzeugheizgerät zuzuführende Brennluft handeln. Die Fluidströmungsrichtung ist in Figur 1 schematisch durch einen Pfeil F dargestellt. Diese Strömungsrichtung ist allerdings nur beispielhaft und kann im Prinzip willkürlich sein, so lange ein Wärmeübertrag zwischen dem strömenden Fluid und der Temperaturerfassungsvorrichtung 10 erfolgen kann.

Die Temperaturerfassungsvorrichtung 10 umfasst einen Temperatursensor 12 sowie ein Kontaktelement 14. Das Kontaktelement 14 umfasst wiederum eine von dem strömenden Fluid wenigstens bereichsweise umströmbare erste Seite 16 sowie eine von der ersten Seite 16 abgewandte zweite Seite 18. Der Temperatursensor 12 ist als Strahlungssensor ausgebildet und das Kontaktelement 14 ist derart relativ zum Temperatursensor 12 angeordnet, dass wenigstens ein Teil der von der zweiten Seite 18 des Kontaktelements 14 emittierten Strahlung von dem Temperatursensor 12 erfassbar ist.

Die zweite Seite 18 des Kontaktelements 14 weist einen in Richtung des Temperatursensors 12 Strahlung abstrahlenden Abstrahlungsbereich 20 auf. Dieser Abstrahlungsbereich 20 weist in dieser Ausführungsform eine konkave Form auf, wobei die orthogonal zu einem beliebigen Oberflächensegment des Abstrahlungsbereichs 20 emittierte Strahlung in Richtung des Temperatursensors 12 ausgesandt wird. Auf diese Weise kann für eine besonders effiziente Strahlungsdetektion gesorgt werden. Hierbei kann ferner daran gedacht werden, den Abstrahlungsbereich 20 wenigstens bereichsweise im Vergleich zu vom Abstrahlungsbereich 20 verschiedenen Bereichen der zweiten Seite 18 des Kontaktelements 14 mit einer höheren Oberflächenrauigkeit zu versehen. Auf diese Weise kann der Grad der in dem Kontaktelement 14 stattfindenden Totalreflexion der zu detektierenden Strahlung im Vergleich zu vom Abstrahlungsbereich verschiedenen Bereichen der zweiten Seite mit geringerer Oberflächenrauigkeit verringert werden, so dass dann Strahlung bevorzugt durch den Abstrahlungsbereich 20 und somit in Richtung des Temperatursensors 12 emittiert wird.

In der in den Figuren 1 und 2 dargestellten Ausführungsform ist der Temperatursensor 12 an einem Gehäuse 22 eines Steuergeräts vorgesehen. Dieses weist in der rein schematischen Darstellung der Figuren 1 und 2 eine Abdeckung 24 sowie eine Schaltungsplatine 26 auf, an welcher der Temperatursensor 12 unmittelbar angebracht ist und an welcher weitere (hier nicht dargestellte) Schaltungsbauelemente des Steuergeräts vorgesehen sein können. Wie in den Figuren 1 und 2 dargestellt, ist das Kontaktelement 14 durch ein Teil der Abdeckung 24 des Gehäuses 22 bereitgestellt.

Um hierbei vermeiden zu können, dass Strahlung, welche von vom Abstrahlungsbereich 20 verschiedenen Bereichen des Gehäuses 22 emittiert wird, vom Temperatursensor 12 empfangen wird, was zwangsläufig zu einer Verfälschung der Messung der Fluidtemperatur führen würde, ist dem in den Figuren 1 und 2 gezeigten Temperatursensor 12 eine Abschirmung 28 zugeordnet: Die Abschirmung 28 weist ein Sichtfenster 30 auf, welches relativ zum Temperatursensor 12 und zum Kontaktelement 14 derart angeordnet ist, dass es im Wesentlichen nur vom Abstrahlungsbereich 20 emittierte Strahlung zum Temperatursensor 12 hindurchlässt. Die Abschirmung 28 kann beispielsweise aus poliertem Blech hergestellt sein, welches einen Emissionsgrad von ungefähr 0,03 aufweist.

Im Gegensatz zur Abschirmung 28 ist das Kontaktelement 14 aus schwarzem Kunststoff hergestellt. Dieser weist einen Emissionsgrad von mehr als 0,9 auf, was wiederum zu einer in dem relevanten Wellenlängenbereich hohen spektralen Bestrahlungsstärke und daher auch zu einer sehr genauen und schnellen Temperaturmessung beiträgt. Ein aus Kunststoff hergestelltes Kontaktelement trägt aufgrund der im Vergleich zu Metall niedrigen Wärmeleitfähigkeit auch dazu bei, dass schnelle Temperaturänderungen des Fluids im Prinzip nicht detektiert werden. Dies führt beispielsweise dazu, dass bei einem Fahrzeug kurzzeitige Temperaturschwankungen, bedingt durch ein Öffnen einer Tür oder eines Fensters, im Wesentlichen nicht detektiert werden. Dieser Umstand hat den Vorteil, dass der Betrieb des Heizgeräts durch die Regelungselektronik nicht kurzzeitig umgestellt werden muss, um diese Temperaturschwankungen zu kompensieren.

Um für einen effizienten Temperaturübertrag zwischen dem Fluid und der ersten Seite 16 des Kontaktelements 14 sorgen zu können, weist das Kontaktelement 14 eine Kontaktflächenformation 32 an der ersten Seite 16 auf. Diese besteht im dargestellten Ausführungsbeispiel aus Vorsprüngen 34. Hier sind rein beispielhaft zwei Vorsprünge 34 vorgesehen, ihre Anzahl ist jedoch nicht darauf beschränkt und kann im Prinzip willkürlich sein. Durch diese Kontaktflächenformation 32 wird eine insgesamt größere Kontaktfläche zwischen Kontaktelement 14 und Fluid im Vergleich zu einer glatten ersten Seite 16 bereitgestellt.

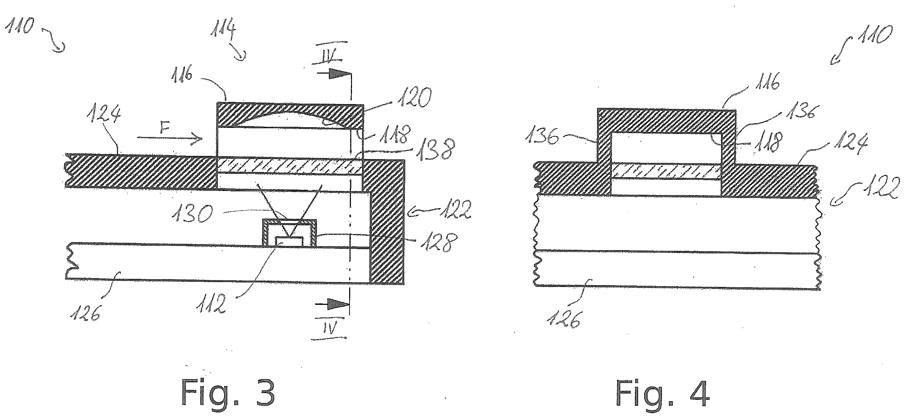

Die spektrale Bestrahlungsstärke weist je nach Temperatur des abstrahlenden Körpers ein Maximum bei einer Wellenlänge auf, welche charakteristisch für die Temperatur des Körpers ist. Im vorliegenden Fall liegen die zu erfassenden Temperaturen im Bereich von unter 50 °C. In diesem Temperaturbereich befindet sich das Maximum im mittleren Infrarotbereich. Aus diesem Grund ist der Temperatursensor 12 als Infrarotsensor ausgebildet. Nachfolgend wird durch Bezugnahme auf die Figuren 3 und 4 eine zweite Ausführungsform beschrieben werden, allerdings nur insoweit sie sich von der ersten Ausführungsform unterscheidet, auf deren Beschreibung ansonsten ausdrücklich hingewiesen wird. Dabei werden gleiche und funktionsgleiche Bauteile wie in der ersten Ausführungsform mit den gleichen Bezugszeichen versehen werden, allerdings erhöht um die Zahl 100.

Die Temperaturerfassungsvorrichtung 110 gemäß der zweiten Ausführungsform umfasst einen an einem Gehäuse 122 eines Steuergeräts vorgesehenen Temperatursensor 112. Ähnlich wie in der ersten Ausführungsform umfasst das Gehäuse 122 eine Abdeckung 124 sowie eine Schaltungsplatine 126, an welcher der Temperatursensor 112 unmittelbar vorgesehen ist. Das Kontaktelement 114 mit einer ersten Seite 116 und einer zweiten Seite 118 umfasst auch in der zweiten Ausführungsform einen Abstrahlungsbereich 120. Im Gegensatz zur ersten Ausführungsform sind in der zweiten Ausführungsform sowohl die erste Seite 116 als auch die zweite Seite 118 des Kontaktelements 114 von dem Fluid umströmbar. Auf diese Weise kann für einen besonders effizienten Energieübertrag zwischen Fluid und Kontaktelement 114 gesorgt werden und es kann darüber hinaus auf eine in der ersten Ausführungsform vorgesehene Kontaktflächenformation verzichtet werden.

Auch in der zweiten Ausführungsform ist das Kontaktelement 114 durch ein Teil des Gehäuses 122 bereitgestellt. Im Gegensatz zur ersten Ausführungsform ist das Kontaktelement 114 jedoch durch Stege 136 mit der Abdeckung 124 verbunden. Durch diese Stegkonstruktion kann die thermische Leitfähigkeit zwischen Kontaktelement 114 und dem übrigen Gehäuse 122 gegenüber der ersten Ausführungsform verringert werden, so dass eine beispielsweise durch elektronische Leistungsbauelemente innerhalb des Gehäuses 122 erzeugte Wärme mit verminderter Wirkung auf das Kontaktelement 114 im Vergleich zu übrigen Teilen der Abdeckung 124 übertragen wird. Auf diese Weise kann eine hohe Messgenauigkeit sichergestellt werden.

Um bei dieser Ausgestaltung verhindern zu können, dass beispielsweise durch das zu messende Fluid herangeförderte Fremdstoffe in das Gehäuse eindringen, ist hierbei ein Fensterelement 138 zwischen Kontaktelement 114 und Temperatursensor 112 vorgesehen, welches durchlässig für die zu messende Strahlung ist.

Im Übrigen gelten die Ausführungen hinsichtlich der ersten Ausführungsform auch hinsichtlich der zweiten, in den Figuren 3 und 4 gezeigten Ausführungsform.

## Patentansprüche

1. Temperaturerfassungsvorrichtung (10; 110) für ein Fahrzeugheizgerät zur Erfassung einer Fluidtemperatur eines in einem Fahrzeugheizgerät verwendeten Fluids, umfassend einen Temperatursensor (12; 112) sowie ein Kontaktelement (14; 114) mit einer von dem Fluid wenigstens bereichsweise umströmbaren ersten Seite (16; 116) und einer von der ersten Seite (16; 116) abgewandten zweiten Seite (18; 118), wobei der Temperatursensor (12; 112) als Strahlungssensor ausgebildet ist und wobei das Kontaktelement (14; 114) derart relativ zum Temperatursensor (12; 112) angeordnet ist, dass wenigstens ein Teil der von der zweiten Seite (18; 118) des Kontaktelements (14; 114) emittierten Strahlung von dem Temperatursensor (12; 112) empfangbar ist, wobeidie zweite Seite (18; 118) des Kontaktelements (14; 114) einen in Richtung des Temperatursensors (12; 112) Strahlung abstrahlenden Abstrahlungsbereich (20; 120) umfasst, dadurch charakterisiert, dass der Abstrahlungsbereich (20; 120) wenigstens bereichsweise im Vergleich zu vom Abstrahlungsbereich (20; 120) verschiedenen Bereichen der zweiten Seite (18; 118) des Kontaktelements (14; 114) eine höhere Oberflächenrauigkeit aufweist , sodass eine Strahlungsemission bevorzugt durch den Abstrahlbereich in Richtung des Temperatursensors erfolgt.

2. Temperaturerfassungsvorrichtung (10; 110) nach Anspruch 1, **dadurch gekennzeichnet, dass** dem Temperatursensor (12; 112) eine ein Sichtfenster (30; 130) aufweisende Abschirmung (28; 128) zugeordnet ist, wobei das Sichtfenster (30; 130) derart relativ zum Temperatursensor (12; 112) und zum Kontaktelement (14; 114) angeordnet ist, dass es im Wesentlichen nur vom Abstrahlungsbereich (20; 120) emittierte Strahlung zum Temperatursensor (12; 112) durchlässt.

3. Temperaturerfassungsvorrichtung (110) nach einem der vorhergehenden Ansprüche,
**dadurch gekennzeichnet, dass** die zweite Seite (118) des Kontaktelements (114) von dem Fluid umströmbar ist.

4. Temperaturerfassungsvorrichtung (10; 110) nach einem der vorhergehenden Ansprüche,
**dadurch gekennzeichnet, dass** der Temperatursensor (12; 112) ein Infrarotsensor ist.

5. Temperaturerfassungsvorrichtung (10; 110) nach einem der vorhergehenden Ansprüche,
**dadurch gekennzeichnet, das**s das Kontaktelement (14; 114) aus, vorzugsweise schwarzem, Kunststoff hergestellt ist.

6. Temperaturerfassungsvorrichtung (10) nach einem der vorhergehenden Ansprüche,
**dadurch gekennzeichnet, dass** das Kontaktelement (14) eine Kontaktflächenformation (32), vorzugsweise einen Vorsprung (34), an der ersten Seite (16) aufweist.

7. Temperaturerfassungsvorrichtung (10; 110) nach einem der vorhergehenden Ansprüche,
**dadurch gekennzeichnet, dass** der Temperatursensor (12; 112) an einem Gehäuse (22; 122) eines Steuergeräts vorgesehen ist, wobei vorzugsweise das Kontaktelement (14; 114) durch ein Teil des Gehäuses (22; 122) bereitgestellt ist.

8. Temperaturerfassungsvorrichtung (110) nach Anspruch 7,
**dadurch gekennzeichnet, dass** das Kontaktelement (114) durch Stege (136) mit dem Gehäuse (122) verbunden ist.

9. Temperaturerfassungsvorrichtung (110) nach Anspruch 7 oder 8,
**dadurch gekennzeichnet, dass** das Gehäuse (122) ein zwischen dem Temperatursensor (112) und dem Kontaktelement (114) angeordnetes, für zu erfassende Strahlung durchlässiges Fensterelement (138) aufweist.

10. Temperaturerfassungsvorrichtung (110) nach einem der vorhergehenden Ansprüche,
**dadurch gekennzeichnet, dass** der Abstrahlungsbereich (20; 120) eine konkave Form aufweist.

11. Temperaturerfassung Vorrichtung (110) noch Anspruch 10,
**dadurch gekennzeichnet, dass** der Abstrahlungsbereich (20; 120) die Form eines Segments einer Kugelschale mit im Bereich des Temperatursensors (12; 112) liegendem Mittelpunkt aufweist

12. Fahrzeugheizgerät, umfassend eine Temperaturerfassungsvorrichtung (10; 110) nach einem der vorhergehenden Ansprüche.

13. Fahrzeugheizgerät nach Anspruch 12, ferner umfassend ein in einem Gehäuse (22; 122) aufgenommenes Steuergerät, wobei der Temperatursensor (12; 112) am Gehäuse (22; 122) vorgesehen ist und wobei das Kontaktelement (14; 114) am Gehäuse (22; 122) vorgesehen oder/und durch dieses bereitgestellt ist.

## Claims

1. Temperature detection device (10; 110) for a vehicle heating device for detecting a fluid temperature of a fluid used in a vehicle heating device, comprising a temperature sensor (12; 112) as well as a contact member (14; 114) with a first side (16; 116) around which fluid can at least partially flow and a second side (18; 118) facing away from the first side (16; 116), wherein the temperature sensor (12; 112) is adapted as a radiation sensor and wherein the contact member (14; 114) is arranged in such a way in relation to the temperature sensor (12; 112) that at least part of the radiation emitted by the a second side (18; 118) of the contact member (14; 114) can be received by the temperature sensor (12; 112), wherein the second side (18; 118) of the contact member (14; 114) comprises a radiation area (20; 120) emitting radiation towards the temperature sensor (12; 112), **characterised in that** the radiation area (20; 120) has a higher surface roughness in comparison to other areas of the second side (18; 118) of the contact member (14; 114) which are different from the radiation emitting area (20; 120),
so that a radiation emission is realized preferably by the radiation emitting area towards the temperature sensor.

2. Temperature detection device (10; 110) according to claim 1,
**characterized in that** a shielding (28; 128) comprising a window (30; 130) is associated to the temperature sensor (12; 112), wherein said window (30; 130) is arranged in relation to the temperature sensor (12; 112) and to the contact member (14; 114) in such a way that it lets mainly pass radiation emitted by the radiation emitting area (20; 120) towards the temperature sensor (12; 112).

3. Temperature detection device (110) according to one of the preceding claims, **characterized in that** the fluid can flow around the second side (118) of the contact member (114).

4. Temperature detection device (10; 110) according to one of the preceding claims,
**characterized in that** the temperature sensor (12; 112) is an infrared sensor.

5. Temperature detection device (10; 110) according to one of the preceding claims,
**characterized in that** the contact member (14; 114) is made of plastic material, preferably of black plastic material.

6. Temperature detection device (10) according to one of the preceding claims, **characterized in that** the contact member (14) comprises a contact surface structure (32), preferably a projection (34) at the first side (16).

7. Temperature detection device (10; 110) according to one of the preceding claims,
**characterized in that** the temperature sensor (12; 112) is provided at a housing (22; 122) of a control device, wherein preferably the contact member (14; 114) is provided by a part of the housing (22; 122).

8. Temperature detection device (110) according to claim 7,
**characterized in that** the contact member (114) is connected to the housing (122) by bars (136).

9. Temperature detection device (110) according to claim 7 or 8,
**characterized in that** the housing (122) comprises a window element (138) arranged between the temperature sensor (112) and the contact member (114) through which the radiation to be detected can pass.

10. Temperature detection device (110) according to one of the preceding claims, **characterized in that** the radiation emitting area (20; 120) has a concave form.

11. Temperature detection device (110) according to claim 10,
**characterized in that** the radiation emitting area (20; 120) has the form of a segment of a spherical shell with a centre in the region of the temperature sensor (12; 112).

12. Vehicle heating device, comprising a temperature detection device (10; 110) according to one of the preceding claims.

13. Vehicle heating device according to claim 12, further comprising a control device received in a housing (22; 122), wherein the temperature sensor (12; 112) is provided at the housing (22; 122) and wherein the contact member (14; 114) is provided at the housing (22; 122) or/and is provided by the housing.

## Revendications

1. Dispositif de détection de température (10; 110) pour un dispositif de chauffage d'un véhicule pour détecter une température de fluide d'un fluide utilisé dans un dispositif de chauffage d'un véhicule, comprenant un capteur de température (12; 112) ainsi qu'un membre de contact (14; 114) avec une première face (16; 116) autour de laquelle le fluide peut circuler au moins partiellement, et une deuxième face (18; 118) opposée à la première face (16; 116), le capteur de température (12; 112) étant adapté en tant que capteur de rayonnement et le membre de contact (14; 114) étant arrangé par rapport au capteur de température (12; 112) de sorte qu'au moins une partie du rayonnement émis par la deuxième face (18; 118) du membre de contact (14; 114) peut être reçu par le capteur de température (12; 112), la deuxième face (18; 118) du membre de contact (14; 114) comprenant une région d'émission de rayonnement (20; 120) émettant du rayonnement envers le capteur de température (12; 112), **caractérisé en ce que** la région d'émission de rayonnement (20; 120) a au moins en partie une plus grande rugosité de surface comparé à des régions de la deuxième face (18; 118) du membre de contact (14; 114) différentes de la région d'émission de rayonnement (20; 120),
de sorte qu'une émission de rayonnement est effectuée de préférence par la région d'émission de rayonnement envers le capteur de température.

2. Dispositif de détection de température (10; 110) selon la revendication 1, **caractérisé en ce qu'**un blindage (28; 128) comprenant une fenêtre de visualisation (30; 130) est associé au capteur de température (12; 112), la fenêtre de visualisation (30; 130) étant arrangée par rapport au capteur de température (12; 112) et au membre de contact (14; 114) de sorte qu'elle ne laisse passer essentiellement envers le capteur de température (12; 112) que du rayonnement émis par la région d'émission de rayonnement (20; 120).

3. Dispositif de détection de température (110) selon une des revendications précédentes,
**caractérisé en ce que** le fluide peut circuler autour de la deuxième face (118) du membre de contact (114).

4. Dispositif de détection de température (10; 110) selon une des revendications précédentes,
**caractérisé en ce que** le capteur de température (12; 112) est un capteur infrarouge.

5. Dispositif de détection de température (10; 110) selon une des revendications précédentes,
**caractérisé en ce que** le membre de contact (14; 114) est fabriqué en matière plastique, de préférence en plastique noir.

6. Dispositif de détection de température (10) selon une des revendications précédentes,
**caractérisé en ce que** le membre de contact (14) comprend à la première face (16) une structure de surface de contact (32), de préférence une projection (34).

7. Dispositif de détection de température (10; 110) selon une des revendications précédentes,
**caractérisé en ce que** le capteur de température (12; 112) est prévu à un boîtier (22; 122) d'un appareil de commande, le membre de contact (14; 114) étant de préférence prévu par une partie du boîtier (22; 122).

8. Dispositif de détection de température (110) selon la revendication 7,
**caractérisé en ce que** le membre de contact (114) est relié au boîtier (122) par des traverses (136).

9. Dispositif de détection de température (110) selon les revendications 7 ou 8, **caractérisé en ce que** le boîtier (122) comprend un membre de fenêtre (138) arrangé entre le capteur de température (112) et le membre de contact (114) et perméable à du rayonnement à détecter.

10. Dispositif de détection de température (110) selon une des revendications précédentes,
**caractérisé en ce que** la région d'émission de rayonnement (20; 120) a une forme concave.

11. Dispositif de détection de température (110) selon la revendication 10,
**caractérisé en ce que** la région d'émission de rayonnement (20; 120) a la forme d'un segment d'une coque sphérique avec un centre dans la région du capteur de température (12; 112).

12. Dispositif de chauffage pour un véhicule, comprenant un dispositif de
détection de température (10; 110) selon une des revendications précédentes.

13. Dispositif de chauffage pour un véhicule selon la revendication 12, comprenant en outre un dispositif de commande reçu dans un boîtier (22; 122), le capteur de température (12; 112) étant prévu au boîtier (22; 122) et le membre de contact (14; 114) étant prévu au boîtier (22; 122) ou/et étant formé par ce dernier.
